# EUROPÄISCHE PATENTANMELDUNG

(11) **EP 2 444 863 A1**
(43) Veröffentlichungstag der Anmeldung: **25.04.2012**
(21) Anmeldenummer: 10188354.4
(22) Anmeldetag: 21.10.2010
(51) Int. Cl.: G05B 15/02, G05B 23/02

(54) **Ausgabebaugruppe und Verfahren zur Energieeinsparung**

(71) Anmelder: Siemens Aktiengesellschaft, 80333 München (DE)
(72) Erfinder: Schwabe, Dietmar, 08496, Neumark (DE)

(57) **Zusammenfassung**

Die Erfindung betrifft eine Ausgabebaugruppe für ein industrielles Automatisierungssystem, umfassend
- eine Versorgungseinheit (300) mit einer Eingangsseite (10) zum Anschluss einer primären Versorgungsspannung (V_{IN}) und einer Ausgangsseite (11) zur Ausgabe einer sekundären Versorgungsspannung (V_{CC},V_{SS}),
- mehrere Ausgänge (1,2,...,n) zur Ausgabe von Ausgangsspannungen (V_{L1},V_{L2},...,V_{Ln}), wobei die Ausgänge (1,2,...,n) jeweils ein Schaltungsteil (101,102,...,10n) aufweisen und die Schaltungsteile (101,102,...,10n) an die sekundäre Versorgungsspannung (V_{CC},V_{SS}) angeschlossen sind,
- eine Steuereinheit (200), welche über Ansteuerleitungen (A1,A2,..,An) zum Schalten der Ausgangsspannungen (V_{L1},V_{L2},...,V_{Ln}) mit den Schaltungsteilen (101,102,...,10n) verbunden ist,

wobei die Steuereinheit (200) Mittel zum Messen der Ausgangsspannungen (V_{L1},V_{L2},...,V_{Ln}) und der Ausgangsströme (I_{L1},I_{L2},...,I_{Ln}) aufweist, wobei weiterhin ein Rechenmittel (201) vorhanden ist, welches ausgestaltet ist einen benötigten Gesamtenergiebedarf zu errechnen, wobei weiterhin das Rechenmittel (201) ausgestaltet ist über eine Steuerleitung (202) die Versorgungseinheit (300) derart zu steuern, dass eine Energieaufnahme minimiert ist.

## Beschreibung

Die Erfindung betrifft eine Ausgabebaugruppe für ein industrielles Automatisierungssystem, umfassend eine Versorgungseinheit mit einer Eingangsseite zum Anschluss einer primären Versorgungsspannung und einer Ausgangsseite zur Ausgabe einer sekundären Versorgungsspannung, mehrere Ausgänge zur Ausgabe von Ausgangsspannungen, wobei die Ausgänge jeweils ein Schaltungsteil aufweisen und die Schaltungsteile an die sekundäre Versorgungsspannung angeschlossen sind, eine Steuereinheit, welche über Ansteuerleitungen zum Schalten der Ausgangsspannungen mit den Schaltungsteilen verbunden ist.

Des Weiteren betrifft die Erfindung ein Verfahren zum Betrieb der oben genannten Ausgabebaugruppe für ein industrielles Automatisierungssystem.

Ausgabebaugruppen sowie Ein-/Ausgabebaugruppen arbeiten in industriellen Automatisierungssystemen in der Regel mit speicherprogrammierbaren Steuerungen zusammen. Alle Baugruppen, die unmittelbar auf den zu automatisierenden industriellen Prozess einwirken, sind E/A-Baugruppen. Dazu gehören: Ein-/Ausgabebaugruppen für die Verarbeitung von binären Signalzuständen und Ein-/Ausgabebaugruppen für die Verarbeitung analoger Signale.

Um eine notwendige Schaltspannung, beispielsweise an einer Relaisbaugruppe, zur Verfügung zu stellen, umfassen derartige Baugruppen eine Versorgungseinheit, welche beispielsweise mit einer Versorgungsspannung aus dem öffentlichen Stromnetz gespeist wird.

Es ist Aufgabe der vorliegenden Erfindung eine Baugruppe zur Verfügung zu stellen bei welcher eine Reduzierung der von der Baugruppe aufgenommenen Energie erzielt werden kann.

Die Aufgabe wird mit der Ausgabebaugruppe mit den Merkmalen des Oberbegriffs des Anspruchs 1 dadurch gelöst, dass die Steuereinheit Mittel zum Messen der Ausgangsspannungen und der Ausgangsströme aufweist, wobei weiterhin ein Rechenmittel vorhanden ist, welches ausgestaltet ist einen benötigten Gesamtenergiebedarf zu errechnen, wobei weiterhin das Rechenmittel ausgestaltet ist, über eine Steuerleitung die Versorgungseinheit derart zu steuern, dass eine Energieaufnahme minimiert ist. Da in der Regel eine Baugruppe für einen maximalen Gesamtenergiebedarf ausgelegt ist, aber dieser maximale Gesamtenergiebedarf in einer individuellen Anwendung nicht immer gefordert ist, kann eine Reduzierung der aufgenommenen Energie erzielt werden. Es wird erfindungsgemäß nur soviel Energie zur Verfügung gestellt, wie die Ausgänge und die an den Ausgängen angeschalteten Lasten wirklich verbrauchen.

In einer vorteilhaften Ausgestaltung ist das Rechenmittel weiter dazu ausgeprägt, für eine momentan herrschende Schaltkonfiguration und daraus resultierenden Lastverhältnissen den benötigten Gesamtenergiebedarf zu errechnen.

Vorzugsweise weist die Versorgungseinheit eine Regeleinheit auf, wobei die Regeleinheit dazu ausgestaltet ist, auf die Höhe der sekundären Versorgungsspannung Einfluss zu nehmen.

Um einen leistungsstarken Rechenalgorithmus zu implementieren ist das Rechenmittel, vorzugsweise als ein Mikrocontroller ausgestaltet.

Eine Einflussnahme auf die den Ausgängen zugeordneten Schaltungsteilen kann dabei einheitlich durch eine Versorgungseinheit erfolgen oder auch selektiv erfolgen bei Vorhandensein mehrerer getrennter Versorgungseinheiten, wobei jede Versorgungseinheit einem Schaltungsteil zugeordnet ist und das Rechenmittel dazu ausgestaltet ist, jede Versorgungseinheit selektiv zu beeinflussen.

Verfahrensgemäß kann beim Betrieb einer Ausgabebaugruppe für ein industrielles Automatisierungssystem dadurch Energie eingespart werden, dass eine Versorgungseinheit über eine Eingangsseite mit einer primären Versorgungsspannung versorgt wird und über eine Ausgangsseite eine sekundäre Versorgungsspannung ausgegeben wird, wobei Ausgangsspannungen über Ausgänge ausgegeben werden, wobei die Ausgänge über jeweils ein Schaltungsteil geschaltet werden und die Schaltungsteile von der sekundären Versorgungsspannung versorgt werden, wobei eine Steuereinheit über Steuerleitungen die Schaltungsteile zum Schalten der Ausgangsspannung ansteuert, dabei werden über ein Mittel die Ausgangsspannungen und die Ausgangsströme gemessen, wobei über ein Rechenmittel ein benötigter Gesamtenergiebedarf errechnet wird und anhand des Ergebnisses die Versorgungseinheit derart gesteuert wird, dass eine Energieaufnahme minimiert wird.

Vorzugsweise kann eine momentan herrschende Schaltkonfiguration und ein daraus resultierendes Lastverhältnis der benötigte Gesamtenergiebedarf berechnet werden.

Immer wenn der benötigte Gesamtenergiebedarf unterhalb des maximal zur Verfügung stehenden Gesamtenergiebedarfs liegt, wird vorteilhafter Weise auf die Höhe der sekundären Versorgungsspannung Einfluss genommen und somit ein unnötiger Energieverbrauch verhindert. Durch die damit erfolgte Optimierung der Spannungsabfälle in den Schaltungsteilen wird die Gesamtenergieaufnahme der Baugruppe reduziert und gleichzeitig kann eine Wärmeabgabe aufgrund einer Verlustleistung minimiert werden.

Es wird eine Reduzierung der aufgenommenen Energie erzielt. Damit kann sowohl die Baugruppe selbst als auch ein Gesamtsystem einen reduzierten Stromverbrauch erzielen. Gleichzeitig verringert sich die Verlustleistung und damit die Erwärmung der Baugruppe. Ein weiterer Vorteil ist die Erweiterung eines Einsatz-Temperaturbereiches der Baugruppe durch Optimierung der Lastverhältnisse, welches bedeutet, dass die Baugruppe in einer Umgebung mit erhöhter Temperatur eingesetzt werden kann.

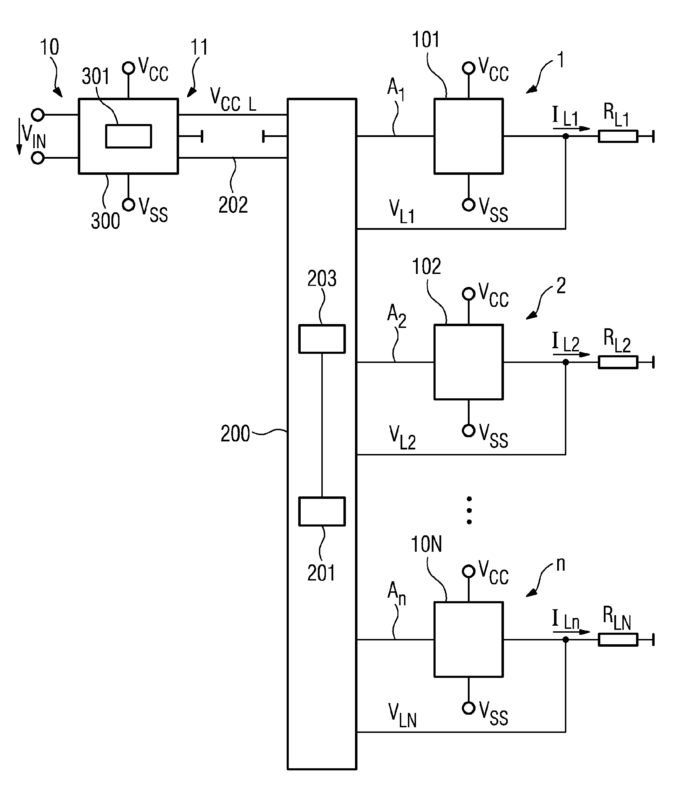

Die Figur zeigt ein Ausgestaltungsbeispiel mit weiteren Ausgestaltungsmerkmalen.

Gemäß der Figur ist eine Ausgabebaugruppe für ein industrielles Automatisierungssystem dargestellt. Die Ausgabebaugruppe umfasst eine Versorgungseinheit 300 mit einer Eingangsseite 10 zum Anschluss einer primären Versorgungsspannung V_{IN} und einer Ausgangsseite 11 zur Ausgabe einer sekundären Versorgungsspannung V_{CC},V_{SS}, mehrere Ausgänge 1,2,...,n zur Ausgabe von Ausgangsspannungen V_{L1},V_{L2},...,V_{LN}, wobei die Ausgänge 1,2,...,n jeweils ein Schaltungsteil 101,102,...,10N aufweisen und die Schaltungsteile an die sekundäre Versorgungsspannung V_{CC},V_{SS} angeschlossen sind.

Eine Steuereinheit 200, welche über Ansteuerleitungen A1,A2,...,An zum Schalten der Ausgangsspannung V_{L1},V_{L2},...,V_{Ln} mit den Schaltungsteilen 101,102,...,100n verbunden ist, steuert bei einem industriellen Automatisierungsprozess über eine speicherprogrammierbare Steuerung die Ausgänge 1,2,...,n (ein Anschluss einer speicherprogrammierbaren Steuerung an die Ausgabebaugruppe bzw. an die Steuereinheit 200 ist nicht dargestellt).

An den Ausgängen 1,2,...,n ist stellvertretend für eine beliebige Last jeweils ein erster Lastwiderstand R_{L1} bis ein n-ter Lastwiderstand R_{LN} angeschlossen. Bei einem Betrieb einer solchen Ausgabebaugruppe in einen industriellen Prozess wird üblicherweise von einem 24 Stunden Betrieb ausgegangen, bei welchem ein ständiger Stromverbrauch erfolgt. Über ein Messmittel werden permanent die Ausgangsspannungen V_{L1},...,V_{Ln} und die Ausgangsströme I_{L1},...,I_{Ln} gemessen. Ein in der Steuereinheit 200 angeordnetes Rechenmittel 201 steht in Verbindung mit dem Messmittel 203 und ist ausgestaltet, einen momentan benötigten Gesamtenergiebedarf der Lastwiderstände R_{L1},...,R_{Ln} zu errechnen, dabei ist das Rechenmittel 201 weiterhin dazu ausgestaltet, über eine Steuerleitung 202 die Versorgungseinheit 300 anhand des Ergebnisses für den momentan benötigten Gesamtenergiebedarf derart zu steuern, dass eine Energieaufnahme der Versorgungseinheit 300 minimiert wird.

Damit die Versorgungseinheit 300 auf die von der Steuereinheit 200 über die Steuerleitung 202 übertragenen Befehle reagieren kann, weist die Versorgungseinheit 300 eine Regeleinheit 301 auf, wobei diese dazu ausgestaltet ist, auf die Höhe der sekundären Versorgungsspannung V_{CC},V_{SS} Einfluss zu nehmen. Mit Herabsetzung der sekundären Versorgungsspannung V_{CC},V_{SS} wird die Versorgungseinheit 300 nicht mehr so stark belastet und ein über die Eingangsseite 10 bereitgestellter Strom wird reduziert und damit ein Energieverbrauch minimiert.

## Patentansprüche

1. Ausgabebaugruppe für ein industrielles Automatisierungssystem, umfassend
- eine Versorgungseinheit (300) mit einer Eingangsseite (10) zum Anschluss einer primären Versorgungsspannung (V_{IN}) und einer Ausgangsseite (11) zur Ausgabe einer sekundären Versorgungsspannung (V_{CC},V_{SS}),
- mehrere Ausgänge (1,2,...,n) zur Ausgabe von Ausgangsspannungen (V_{L1},V_{L2},...,V_{L1}), wobei die Ausgänge (1,2,...,n) jeweils ein Schaltungsteil (101,102,...,10n) aufweisen und die Schaltungsteile (101,102,...,10n) an die sekundäre Versorgungsspannung (V_{CC},V_{SS}) angeschlossen sind,
- eine Steuereinheit (200), welche über Ansteuerleitungen (A1,A2,..,An) zum Schalten der Ausgangsspannungen (V_{L1},V_{L2},...,V_{Ln}) mit den Schaltungsteilen (101,102,...,10n) verbunden ist,
**dadurch gekennzeichnet, dass** die Steuereinheit (200) Mittel zum Messen der Ausgangsspannungen (V_{L1},V_{L2},...,V_{Ln}) und der Ausgangsströme (I_{L1},I_{L2},...,I_{Ln}) aufweist, wobei weiterhin ein Rechenmittel (201) vorhanden ist, welches ausgestaltet ist einen benötigten Gesamtenergiebedarf zu errechnen, wobei weiterhin das Rechenmittel (201) ausgestaltet ist über eine Steuerleitung (202) die Versorgungseinheit (300) derart zu steuern, dass eine Energieaufnahme minimiert ist.

2. Ausgabebaugruppe nach Anspruch 1, mit einem Rechenmittel (201), welches ausgestaltet ist für eine momentan herrschende Schaltkonfiguration und den daraus resultierenden Lastverhältnissen den benötigten Gesamtenergiebedarf zu errechnen.

3. Ausgabebaugruppe nach einem der Ansprüche 1 oder 2,
wobei eine Regeleinheit (301) der Versorgungseinheit (300) aus gestaltet ist auf die Höhe der sekundären Versorgungsspannung (V_{CC},V_{SS}) Einfluss zu nehmen.

4. Ausgabebaugruppe nach einem der Ansprüche 1 bis 3, wobei das Rechenmittel (201) als ein Mikrocontroller ausgestaltet ist.

5. Ausgabebaugruppe nach einem der Ansprüche 1 bis 4, aufweisend weitere Versorgungseinheiten, wobei jede Versorgungseinheit einem Schaltungsteil (101,102,...,10n) zugeordnet ist und das Rechenmittel (201)dazu ausgestaltet ist jede Versorgungseinheit selektiv zu beeinflussen.

6. Verfahren zum Betrieb einer Ausgabebaugruppe für ein industrielles Automatisierungssystem, wobei
- eine Versorgungseinheit (300) über eine Eingangsseite (10) mit einer primären Versorgungsspannung (V_{IN}) versorgt wird und über eine Ausgangsseite (11) eine sekundäre Versorgungsspannung (V_{CC},V_{SS}) ausgegeben wird,
- Ausgangsspannungen (V_{L1},V_{L2},...,V_{Ln}) über Ausgänge (1,2,...,n) ausgegeben werden, wobei die Ausgänge (1,2,...,n) über jeweils ein Schaltungsteil (101,102,...,10n) geschaltet werden und die Schaltungsteile (101,102,...,10n) von der sekundären Versorgungsspannung (V_{CC},V_{SS}) versorgt werden,
- eine Steuereinheit (200) über Ansteuerleitungen (A1,A2,...,An) die Schaltungsteile (101,102,...,10n) zum Schalten der Ausgangsspannungen (V_{L1},V_{L2},...,V_{Ln}) ansteuert,
**dadurch gekennzeichnet, dass** über ein Mittel die Ausgangsspannungen (V_{L1},V_{L2},...,V_{Ln}) und die Ausgangsströme (I_{L1},I_{L2},...,I_{Ln}) gemessen werden, wobei über ein Rechenmittel (201) ein benötigter Gesamtenergiebedarf errechnet wird und anhand des Ergebnisses die Versorgungseinheit (300) derart gesteuert wird, dass eine Energieaufnahme minimiert wird.

7. Verfahren nach Anspruch 6, wobei für eine momentan herrschende Schaltkonfiguration und daraus resultierende Lastverhältnisse der benötigte Gesamtenergiebedarf berechnet wird.

8. Verfahren nach Anspruch 6 oder 7, wobei auf die Höhe der sekundären Versorgungsspannung (V_{CC},V_{SS}) Einfluss genommen wird.
